(19) **Europäisches Patentamt**

**European Patent Office**

**Office européen des brevets**

(11) Numéro de publication : **0 446 081 B1**

(12) **FASCICULE DE BREVET EUROPEEN**

(45) Date de publication du fascicule du brevet :
**14.10.92 Bulletin 92/42**

(51) Int. Cl.$^5$ : **G07F 7/10,** G06K 19/067

(21) Numéro de dépôt : **91400110.2**

(22) Date de dépôt : **18.01.91**

(54) **Procédé de chargement de programmes d'application dans un lecteur de carte à mémoire à microprocesseur et système destiné à sa mise en oeuvre.**

(30) Priorité : **25.01.90 FR 9000868**

(43) Date de publication de la demande :
**11.09.91 Bulletin 91/37**

(45) Mention de la délivrance du brevet :
**14.10.92 Bulletin 92/42**

(84) Etats contractants désignés :
**DE ES GB IT NL**

(56) Documents cités :
**EP-A- 0 089 876**
**EP-A- 0 096 599**
**EP-A- 0 134 109**
**EP-A- 0 202 622**
**PTR - PHILIPS TELECOMMUNICATION & DATA SYSTEMS REVIEW vol. 45, no. 2, juin 1987, pages 10-26, Eindhoven, NL; J.F. BRIEN-Det al.: "French PTT Minitel and Lecam Programme"**

(73) Titulaire : **GEMPLUS CARD INTERNATIONAL Avenue du Pic de Bertagne Parc d'Activités de la Plaine de Jouques F-13420 Gemenos (FR)**

(72) Inventeur : **Karlisch, Thierry, Cabinet Ballot-Schmit 7, rue Le Sueur F-75116 Paris (FR)**
Inventeur : **Le Roux, Jean-Yves, Cabinet Ballot-Schmit 7, rue Le Sueur F-75116 Paris (FR)**

(74) Mandataire : **Schmit, Christian Norbert Marie et al Cabinet Ballot-Schmit 7, rue Le Sueur F-75116 Paris (FR)**

EP 0 446 081 B1

Jouve, 18, rue Saint-Denis, 75001 PARIS

**Description**

L'invention se rapporte aux procédés et systèmes utilisant des cartes à mémoire portées par des utilisateurs en liaison avec les lecteurs à microprocesseurs, eux-mêmes reliés par téléphone à un centre serveur.

De tels systèmes sont utilisables par exemple pour des applications liées à la gestion de comptes clients : chaque client dispose d'un ensemble de données qui lui sont propres, par exemple une identité sous forme de code, un montant maximum d'achats, un code caractéristique d'un type de client etc... . Classiquement ces données, propres au client, sont en mémoire dans la carte à mémoire.

Le lecteur de cartes comporte un microprocesseur destiné à effectuer l'opération ou la suite d'opérations demandées dans le cadre d'une application, par exemple une vérification de l'identité du client ou le passage d'une commande etc..., à partir d'une part des données en mémoire sur la carte propre au client et lues par le lecteur lorsque nécessaire et, d'autre part, d'un programme d'application correspondant à l'utilisation demandée. Un tel système est décrit dans la revue Philips TDS review Vol 45, N° 2 Juin 1987.

Classiquement les programmes d'application sont stockés dans un serveur central et sont transférés par téléchargement à la mémoire vive du microprocesseur lorsque nécessaire pour l'utilisation demandée , via la ligne téléphonique qui relie le lecteur de cartes au serveur.

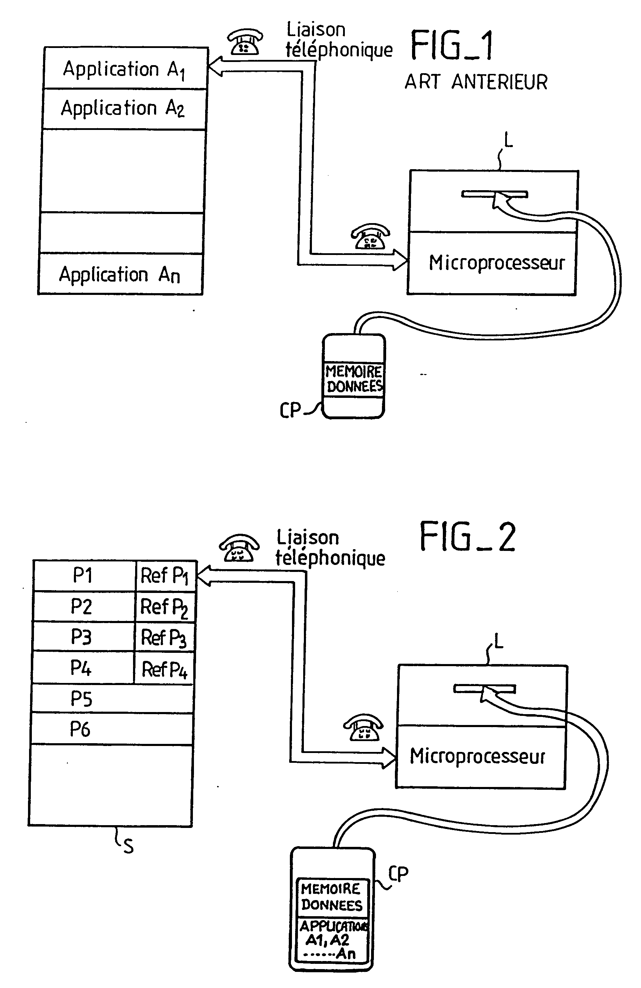

Comme représenté sur la figure 1, qui illustre un système classique, le serveur S comporte en mémoire tous les programmes d'application A1,A2,...An. Ce serveur est relié aux lecteurs de cartes téléchargeables tels que L par le réseau téléphonique. Un lecteur comporte une partie lecture proprement dite des cartes à mémoire, et une partie microprocesseur assurant la gestion de l'application. Un tel système connu fonctionne de la manière suivante :
– la carte à puce CP est introduite dans le lecteur L ;
– le lecteur L se connecte alors au serveur S ;
– le serveur télécharge ensuite le programme d'application requis dans le lecteur.
– une fois le téléchargement de l'application terminé, le lecteur exécute l'application.

Un tel système a un inconvénient majeur qui est la lenteur de la procédure de téléchargement de l'application dans le lecteur du fait du moyen de transmission utilisé : la ligne téléphonique est un support de transmission de bas débit (75 bauds). De plus la taille mémoire nécessaire dans le serveur pour stocker tous les programmes d'application est grande.

L'invention a pour objet un procédé de chargement de programmes d'application dans un lecteur de carte à mémoire à microprocesseur, permettant de remédier à ces inconvénients, le chargement du programme d'application étant beaucoup plus rapide et la taille mémoire nécessaire dans le serveur moins grande que dans les systèmes classiques. Pour cela le stockage des programmes d'application est effectué au préalable dans les cartes à mémoire qui ouvrent droit à ces applications.

Selon l'invention,un procédé de chargement de programmes d'application dans un lecteur de carte à mémoire à microprocesseur, relié par téléphone à un centre serveur, est caractérisé en ce qu'il consiste :
– dans une phase préalable à mettre en mémoire des programmes d'application dans la mémoire des cartes à mémoire ouvrant droit à ces applications, et à mettre en mémoire dans le serveur gérant ces applications des pointeurs associés à chacun de ces programmes, ces pointeurs étant interprétables par le lecteur pour retrouver le programme d'application correspondant sur la carte et le transférer en mémoire vive du lecteur, et
– dans une phase d'utilisation, après introduction de la carte dans le lecteur déclenchant un appel téléphonique au serveur, à transférer via la ligne téléphonique, le pointeur de l'application requise du serveur au lecteur, le lecteur, après interprétation de ce pointeur, commandant l'interrogation de la carte et le transfert du programme de l'application en mémoire vive du lecteur en vue de son exécution.

L'invention a également pour objet le système destiné à sa mise en oeuvre.

L'invention sera mieux comprise et d'autres caractéristiques apparaîtront à la lecture de la description qui suit en référence aux figures annexées.
– la figure 1 est le schéma d'un système à carte à mémoire et lecteur téléchargeable connu décrit ci-dessus ;
– la figure 2 est le schéma d'un système carte à mémoire et lecteur téléchargeable selon l'invention ;
– la figure 3 illustre une première variante du procédé selon l'invention permettant le chargement rapide des programmes d'application ;
– la figure 4 illustre une seconde variante du procédé selon l'invention.

Selon l'invention , le serveur continue à piloter l'ensemble des applications qu'il gère, mais les programmes d'application correspondant ne sont plus stockés dans leur totalité dans le serveur comme c'était le cas précédemment. Ils sont stockés, au moins pour les plus utilisés, dans les cartes à mémoire qui ouvrent droit à ces applications, où ils peuvent être lus au moyen de pointeurs d'application associés. Ces pointeurs d'application sont des commandes transmises au lecteur et que ce dernier interprète pour retrouver les programmes d'application mémorisés dans la carte.

Ces pointeurs d'application sont transmis par le serveur au lecteur via la liaison téléphonique, ou encore, si le lecteur dispose d'une zone de mémoire non volatile, lors d'une première connexion le serveur peut demander au lecteur de mémoriser le pointeur d'application transmis, de sorte que, lors de connexions futures, seule la référence de ce pointeur soit à transmettre via le réseau téléphonique.

Le système selon l'invention représenté sur la figure 2 est alors le suivant : le serveur S ne contient plus les programmes d'application A1,A2,...An comme représenté sur la figure 1 mais seulement des pointeurs d'application et éventuellement les références de ces pointeurs d'application, par exemple P1 et ref P1 correspondant à une application A1, P2 et ref P2 correspondant à A2 etc..., P5 correspondant à A5, P6 correspondant à A6 etc.

Le serveur est relié aux lecteurs tels que L par le réseau téléphonique. Le lecteur est susceptible de lire une carte à mémoire, CP, comportant dans sa mémoire d'une part les données propres au titulaire de la carte, comme vu précédemment, et d'autre part, les programmes d'application susceptibles d'être exécutés en liaison avec cette carte, ou au moins les plus couramment utilisés.

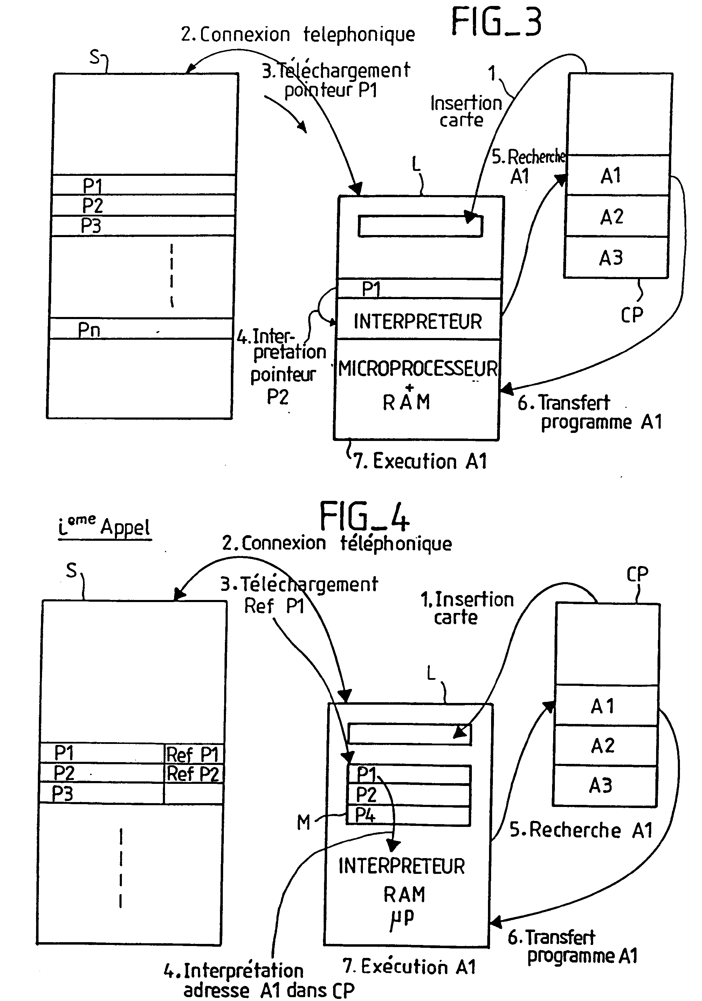

Le procédé de chargement rapide de programmes d'application dans le lecteur à microprocesseur susceptible de les exécuter est alors le suivant comme illustré par la figure 3 :

Etape 1. La carte à mémoire CP est introduite dans le lecteur L ;

Etape 2. Le lecteur se connecte alors au serveur;

Etape 3. Un pointeur d'application est téléchargé par le serveur dans le lecteur, par exemple le pointeur P1 correspondant à un programme A1 de vérification d'identité du titulaire ;

Etape 4. Le pointeur d'application, qui est une commande, est alors interprété par le lecteur L ; c'est par exemple un ordre de lecture d'une partie de mémoire de la carte à mémoire ;

Etape 5. Le lecteur recherche le programme d'application, A1, correspondant mémorisé dans la carte ;

Etape 6. Le programme d'application A1 contenu dans cette partie de mémoire de la carte est alors chargé depuis la carte vers le lecteur, et ce chargement est rapide ;

Etape 7. Le lecteur exécute alors l'application.

Si le lecteur dispose en outre d'une zone mémoire non volatile M de petite capacité, 8K Octets par exemple, ce qui n'augmente pas sensiblement le coût du lecteur, le procédé de chargement peut être encore accéléré en mémorisant dans le serveur, en plus des pointeurs d'applications tels que P1, P2...les codes de référence associés.

Lors de la première connexion du lecteur au serveur, le pointeur du programme d'application requis est transféré et mis en mémoire de façon définitive dans le lecteur dans la zone mémoire non volatile M où il est susceptible d'être retrouvé ultérieurement par le code référence.

Comme illustré par la figure 4, lors d'une connexion ultérieure requérant la même application, issue de ce même lecteur, le pointeur d'application correspondant n'est plus transmis : seule la référence permettant de le retrouver dans la mémoire du lecteur est transmise via la ligne téléphonique. Puis, comme dans la première variante, l'interprétation du pointeur permet de trouver la zone mémoire de la carte contenant le programme d'application correspondant qui est alors chargé en mémoire vive du microprocesseur du lecteur en vue d'être exécuté.

Les pointeurs mis en mémoire dans la mémoire non volatile du lecteur peuvent provenir de centres serveurs différents par exemple P4 sur la figure 4, si ce lecteur est relié via le réseau téléphonique à un ou plusieurs serveurs.

Bien entendu, ces deux variantes ne sont pas exclusives et peuvent être mises en oeuvre conjointement dans un même système. Par exemple sur la figure 4, le pointeur P3 qui n'a pas été mis en mémoire dans le lecteur devrait, si l'application correspondante A3 est requise, être téléchargé dans le lecteur

Le procédé de chargement rapide de programmes d'application peut également coexister avec le procédé classique de téléchargement du serveur au lecteur, lorsque nécessaire, pour des applications mises en oeuvre plus rarement ou pour des applications nouvelles qui n'ont pu être mémorisées dans les cartes, le système ayant bien sûr pour ces applications l'inconvénient de la durée du téléchargement, comme les systèmes antérieurs.

## Revendications

1. Procédé de chargement de programmes d'application (Ai) dans un lecteur (L) de carte à mémoire (CP), le lecteur (L) comportant un microprocesseur et étant relié par téléphone à un centre serveur (S) caractérisé en ce qu'il consiste :

   dans une phase préalable à mettre en mémoire des programmes d'application (Ai) dans les mémoires des cartes à mémoire (CP) ouvrant droit à ces applications, et à mettre en mémoire dans le serveur (S) gérant ces applications des pointeurs (Pi) associés à chacun de ces programmes (Ai), ces pointeurs (Pi) étant interprétables par le lecteur (L) pour retrouver le programme d'application (Ai) correspondant sur une carte (CP) et le transférer en mémoire vive du lecteur, et ;

   – dans une phase d'utilisation après introduction de la carte (CP) dans le lecteur (L), déclenchant un appel téléphonique au serveur (S), à transférer via la ligne téléphonique, le pointeur (Pi) de l'application requise du serveur au lecteur, le lecteur, après interprétation de ce pointeur (Pi) commandant l'interrogation de la carte (CP) et le transfert du programme de l'application (Ai) en mémoire vive du lecteur (L) en vue de son exécution.

2. Procédé selon la revendication 1, caractérisé en ce que des codes de référence (Ref Pi) associés aux pointeurs d'application (Pi) sont mémorisés dans le serveur et en ce que, sur demande du serveur (S), les pointeurs (Pi) sont mémorisés dans une mémoire non volatile du lecteur (L) lors de leur premier transfert vers ce lecteur et sont repérables dans le lecteur par leurs codes de référence (Ref Pi), et en ce que lors des utilisations ultérieures de la même application par le lecteur (L), seul le code de référence (Ref Pi) du pointeur d'application (Pi) correspondant est transféré du serveur (S) au lecteur (L) via la ligne téléphonique, ce code de référence (Ref Pi) désignant la zone mémoire du lecteur (L) contenant le pointeur (Pi) correspondant à interpréter par le lecteur pour commander le chargement du programme d'application (Ai) de la carte mémoire (CP) à la mémoire vive du lecteur (L) en vue de son exécution.

3. Procédé selon la revendication 2, caractérisé en ce que, en plus des pointeurs (Pi) associés à des programmes d'application mis en mémoire dans les cartes à mémoire, et des codes de référence (Ref Pi) associés à ces pointeurs, le serveur comporte des programmes d'application non mémorisés dans les cartes à mémoire (CP) et transférés au lecteur (L), lorsqu'il y a lieu via la ligne téléphonique.

4. Système destiné à la mise en oeuvre du procédé selon l'une des revendications précédentes comportant:
   – au moins un centre serveur (S),
   – au moins un lecteur (L) à microprocesseur comportant une mémoire vive et relié par téléphone au centre serveur pour la lecture de cartes à mémoire (CP) et l'exécution d'applications, et
   – un ensemble de cartes à mémoire (CP) comportant chacune une zone mémoire de données propres au porteur, caractérisé en ce que les cartes (CP) comportent en plus une zone mémoire pour des programmes d'applications (Ai) auxquels elles ouvrent droit, que le centre serveur (S) comporte une mémoire contenant des pointeurs (Pi) associés à chacun des programmes (Ai) et que le lecteur (L) est pourvu d'un interpréteur pour l'interprétation des pointeurs.

5. Système selon la revendication 4, caractérisé en ce que le lecteur (L) comporte en plus d'une mémoire vive associée au microprocesseur, une zone mémoire non volatile pour la mise en mémoire éventuelle des pointeurs d'application (Pi) après leur transfert du serveur (S) au lecteur (L).

6. Système selon la revendication 5, caractérisé en ce que la zone mémoire non volatile du lecteur (L) est partagée entre des pointeurs en provenance de centres serveurs différents.

**Patentansprüche**

1. Verfahren zum Laden von Anwenderprogrammen (Ai) in ein Lesegerät (L) für Speicherkarten, wobei das Lesegerät (L) einen Mikroprozessor umfaßt und über eine Fernmeldeeinrichtung mit einem Zentralrechner (S) verbunden ist, dadurch gekennzeichnet, daß es folgende Stufen umfaßt:
   eine Vorphase, in der die Anwenderprogramme (Ai) in die Speicher der anwendungsangepaßten Speicherkarten (CP) geladen werden und den jeweiligen Programmen (Ai) zugeordnete Zeiger (Pi) in die Speicher des diese Anwendungen steuernden Zentralrechners (S) geladen werden, wobei diese Zeiger (Pi) durch das Lesegerät (L) ausgewertet werden können, um das entsprechende Anwenderprogramm (Ai) auf einer Karte (CP) zu finden und es in einen nichtflüchtigen Speicher des Lesegerätes zu übertragen, und;
   eine Anwendungsphase nach Einführung der Karte (CP) in das Lesegerät (L), so daß ein Telefonanruf an den Zentralrechner (S) veranlaßt wird, in der über die Fernmeldeleitung der Zeiger (A) der Anwendung, der durch den Zentralrechner vom Lesegerät verlangt wird, übertragen wird, wonach das Lesegerät nach Auswertung des Zeigers (Pi) die Anforderung der Auswertung der Karte (CP) und die Übertragung des Anwenderprogramms (Ai) in den flüchtigen Speicher des Lesegeräts (L) bewirkt, so daß das Programm ausgeführt werden kann.

2. Verfahren nach Anspruch 1, dadurch gekennzeichnet, daß die den Anwendungszeigern (Pi) zugeordneten Bezugscodes (RefPi) in den Zentralrechner geladen werden und daß gemäß Anforderung durch den Zentralrechner (S) die Zeiger (Pi) im nichtflüchtigen Speicher des Lesegeräts (L) dann geladen werden, wenn sie das erste Mal in das Lesegerät übertragen werden und im Lesegerät durch deren Bezugscodes (RefPi) markierbar sind, und daß bei späterem Inanspruchnehmen derselben Anwendung durch das Lesegerät (L) lediglich der Bezugscode (RefPi) des entsprechenden Anwendungszeigers (Pi) von dem Zentralrechner (S) zum Lesegerät (L) über die Fernmeldeleitung übertragen wird, wobei dieser Bezugscode (RefPi) den Speicherbereich des Lesegeräts (L) angibt, der den entsprechenden Zeiger (Pi) enthält, der durch das Lesegerät auszuwerten ist, um das Laden des Anwendersprogramms (Ai) von der Speicherkarte (CP) in den flüchtigen Speicher des Lesegeräts (L) zu bewirken, so daß das Programm ausgeführt werden kann.

3. Verfahren nach Anspruch 2, dadurch gekennzeichnet, daß außer den den Anwendersprogrammen zugeordneten und in den Speicher der Speicherkarten geladenen Zeigern und den diesen Zeigern zugeordnete Bezugscodes der Zentralrechner Anwendersprogramme umfaßt, die nicht in den Speicherkarten (CP) gespeichert sind und die dem Lesegerät übertragen werden, wenn dies über die Fernmeldeleitung stattzufinden hat.

4. System zur Ausführung des Verfahrens nach einem der vorhergehenden Ansprüche mit:
   – mindestens einem Zentralrechner (S).
   – mindestens einem mit einem Mikroprozessor ausgestatteten, einen flüchtigen Speicher enthaltenden und über eine Fernmeldeleitung mit dem Zentralrechner (S) verbundenen Lesegerät (L) zum Lesen der Speicherkarten (CP) und
   – mehrere Speicherkarten (CP), die jeweils einen für den Träger zugeordnete Daten vorgesehenen Speicherbereich umfassen, dadurch gekennzeichnet, daß die Karten (CP) weiterhin jeweils einen Speicherbereich für die Anwendersprogramme (Ai) umfassen, auf die sie angepaßt sind, daß der Zentralrechner (S) einen jeweils einem der Programme (Mi) zugeordnete Zeiger enthaltenden Speicher umfaßt und daß das Lesegerät (L) mit einem Übersetzer versehen ist, um die Zeiger zu übersetzen.

5. System nach Anspruch 4, dadurch gekennzeichnet, daß das Lesegerät (L) außer einem dem Mikroprozessor zugeordneten flüchtigen Speicher einen nichtflüchtigen Speicherbereich zur wahlweisen Speicherung von Anwendungszeigern (Pi) umfaßt, nachdem sie vom Zentralrechner (S) zum Lesegerät übertragen worden sind.

6. System nach Anspruch 5, dadurch gekennzeichnet, daß der nichtflüchtigen Speicherbereich des Lesegeräts (L) für die Zeiger aufgeteilt ist, die von verschiedenen Zentralrechnern herstammen.

**Claims**

1. Method for application (Ai) program loading in a memory (CP) card reader (L), the reader (L) comprising a microprocessor and being linked by telephone to a serving centre (S), characterized by the fact that it consists:
   -- in a preliminary phase, of storing application programs (Ai) in the memories of the memory cards (CP) giving right to these applications, and storing in the serving centre (S) controlling these applications markers (Pi) associated with each of these programs (Ai), these markers (Pi) being interpretable by said reader (L) in order to find the corresponding application program (Ai) on a card (CP) and transfer it to the live memory of the reader, and,
   -- in a utilization phase, after the introduction of the card (LP) into the reader (L), of effecting a telephone call to the serving centre (S) of transferring the marker (Pi) of the required application from the serving centre to the reader via the telephone line which said reader, after the interpretation of this marker (Pi), effects the interrogation of the card (CP) and the transfer of the program of the application (Ai) to the live memory of the reader (L) for the purpose of its execution.

2. Method in accordance with Claim 1, characterized by the fact that reference codes (RefPi) associated with the application markers (Pi) are memorized in the serving centre and that on the request of the serving centre (S) the markers (Pi) are memorized in a non-volatile memory of the reader (L) during their first transfer to this reader and can be marked in the reader by their reference codes (RefPi) and that during the subsequent utilizations of the same application by the reader (L) only the reference code (RefPi) of the corresponding application marker (Pi) is transferred from the serving centre (S) to the reader (L) via the telephone line, this reference code (RefPi) designating the memory zone of the reader (L) containing the corresponding marker (Pi) to be interpreted by the reader in order to effect the loading of the application program (Ai) from the memory card (CP) to the live memory of the reader (L) with a view to its execution.

3. Process in accordance with Claim 2, characterized by the fact that in addition to the markers (Pi) associated with application programs stored in the memory cards and the reference codes (RefPi) associated with these markers the serving station comprises application programs not memorized in the memory cards (CP) and transferred to the reader (L), when there is cause, via the telephone line.

4. System for carrying out the method according to any one of the foregoing claims, comprising:
    -- at least one serving centre (S),
    -- at least one microprocessor reader (L), comprising a live memory and connected by telephone to the serving centre, for reading memory cards (CP) and for the execution of applications,
    -- a set of memory cards (CP) each comprising a memory zone of data appropriate to the carrier, characterized by the fact that the memory zones (CP) additionally comprise a memory zone for application programs (Ai) to which they afford entitlement, that the serving centre (S) comprises a memory containing the markers (Pi) associated with each of the programs (Ai) and that the reader (L) is provided with an interpreter for the interpretation of the markers.

5. System in accordance with Claim 4, characterized by the fact that the reader (L) comprises, in addition to a live memory associated with the microprocessor, a non-volatile memory zone for the possible storage of the application markers (Pi) after their transfer from the serving centre (S) to the reader (L).

6. System in accordance with Claim 5, characterized by the fact that the non-volatile memory zone of the reader (L) is shared between markers originating from different serving centres.

FIG_1

ART ANTERIEUR

Application A₁

Application A₂

Application An

Liaison téléphonique

Microprocesseur

MEMOIRE DONNEES

CP

L

FIG_2

| P1 | Ref P₁ |
| P2 | Ref P₂ |
| P3 | Ref P₃ |
| P4 | Ref P₄ |
| P5 | |
| P6 | |

Liaison téléphonique

Microprocesseur

MEMOIRE DONNEES

APPLICATION A1, A2 ......An

CP

L

S

7

## FIG_3

2. Connexion telephonique

3. Téléchargement pointeur P1

1. Insertion carte

S

P1
P2
P3

Pn

4. Interprétation pointeur P2

L

P1

INTERPRETEUR

MICROPROCESSEUR
+
RAM

5. Recherche A1

A1
A2
A3

CP

6. Transfert programme A1

7. Execution A1

## FIG_4

$i^{eme}$ Appel

2. Connexion téléphonique

3. Téléchargement Ref P1

1. Insertion carte

CP

S

P1    Ref P1
P2    Ref P2
P3

L

P1
P2
P4

M

INTERPRETEUR

RAM
μP

A1
A2
A3

5. Recherche A1

6. Transfert programme A1

4. Interprétation adresse A1 dans CP

7. Exécution A1